# EUROPEAN PATENT APPLICATION

(11) **EP 3 901 787 A1**
(43) Date of publication of application: **27.10.2021**
(21) Application number: 20171109.0
(22) Date of filing: 23.04.2020
(51) Int. Cl.: G06F 16/901, A63F 13/47, H04N 21/8541

(54) **GRAPHING TOOL**

(71) Applicant: Stornaway Productions Ltd., Bristol BS8 4TF (GB)
(72) Inventor: HOWE, Rupert Keith Beauclerk, Bristol, BS8 4TF (GB); HOWE, Kate, Bristol, BS8 4TF (GB)
(74) Representative: CSY Herts

(57) **Abstract**

A graphing tool comprising a computer system having a processor, a display device and user input means, and further including a rendering engine for displaying a plurality of graphical elements, ports on the elements and links forming interconnections between the ports, on the display device, and an element database stored as a data model having an element model for each element and which for each element stores an element object having an element ID, and at least one child variant object having a respective variant ID, whereby each element model is used by the rendering engine to determine a subset of characteristics of each respective element to render on the display device, based on which variant ID is currently active for the element.

## Description

This invention relates to apparatus and methods for providing a graph or flowcharting tool for video production and more particularly, to assist with producing interactive video or TV.

With the advent of new ways of delivering video programs, and in particular streaming of video programming, it is possible to provide a plurality of choices at branch points in the storyline, so that there may be multiple storylines which can be chosen by the viewer and thus provide a form of interactive TV. Typically, during video production, these types of storylines have been created manually using a physical storyboarding process, or other complex methods of planning and verifying of clear routes through the storyline. Also, of course, these tools must be used to ensure that the appropriate sections of the program are recorded and done so in a way in which they will link together correctly, during viewing. This makes the production of such content difficult and therefore expensive.

This is a complex problem and has parallels with the technical problem of software design, verification and testing for object oriented, software code. It is, for example, necessary to track different variations of particular elements of the storyline which will typically vary state depending on context such as on the entry path from a previous element in the route through the storyline. This is because the elements in a particular scene, such as the dialogue, may need to vary depending on what has already happened in the story on the particular path chosen by the viewer. It is also necessary to keep track of multiple different routes into and/or out of each element.

Historically, video game design tools, as well as physical devices such as storyboards and sticky notes, have been used to help with this, but it is still difficult for people and tools which were originally created for preparing traditional linear film content, to be used to manage the complexity of content creation. For interactive use in which a plurality of choices will be made in real-time, at different stages of the program delivery to the viewer.

Traditionally, there are software libraries available to render flow chart-type elements as a user interface. For example, JointJs is a JavaScript library and framework which creates complex and interactive graphs for rendering using HTML, on "paper", based on materials stored in a "graph" database model. However, although such tools can be effective at rendering flow charts and linking back user interface changes to a separate database, such tools lack several important aspects which are necessary to solve the problems set out above.

In accordance with a first aspect of the invention there is provided, a graphing tool comprising a computer system having a processor, a display device and user input means, and further including a rendering engine for displaying a plurality of graphical elements, ports on the elements and links forming interconnections between the ports, on the display device, and an element database stored as a data model having an element model for each element and which for each element stores an element object having an element ID, and at least one child variant object having a respective variant ID, whereby each element model is used by the rendering engine to determine a subset of characteristics of each respective element to render on the display device, based on which variant ID is currently active for the element.

Embodiments of the invention will now be described, by way of example, with reference to the drawings in which:-
Figure 1 is a schematic diagram showing a connection between three tabbed islands with a first variant active;
Figure 2 is a schematic diagram of one of the tabbed islands of Figure 1, showing a first variant of that island;
Figure 3 is a schematic diagram equivalent to Figure 1 but showing a second variant of one of the tabbed islands;
Figure 4 is a schematic diagram showing several tabbed islands and a sidebar text entry form, on a display device; and
Figure 5 is a schematic diagram showing a client server arrangement.

In the embodiments described below, the prior art arrangements for creating interactive stories have been developed, by replacing them and augmenting them with an automated graphing tool which allows user input to be organised and visually represented in a way which maps directly and intuitively into content creation. Indeed in the preferred embodiment, the content may actually be stored in the underlying database, and associated with the relevant parts and branches of the storyline through the user interface. The video sequences may then be previewed and verified using the graph user interface. There is also described a detailed implementation based on an existing JavaScript diagramming software library (JointJs) but with some necessary enhancements to the standard library.

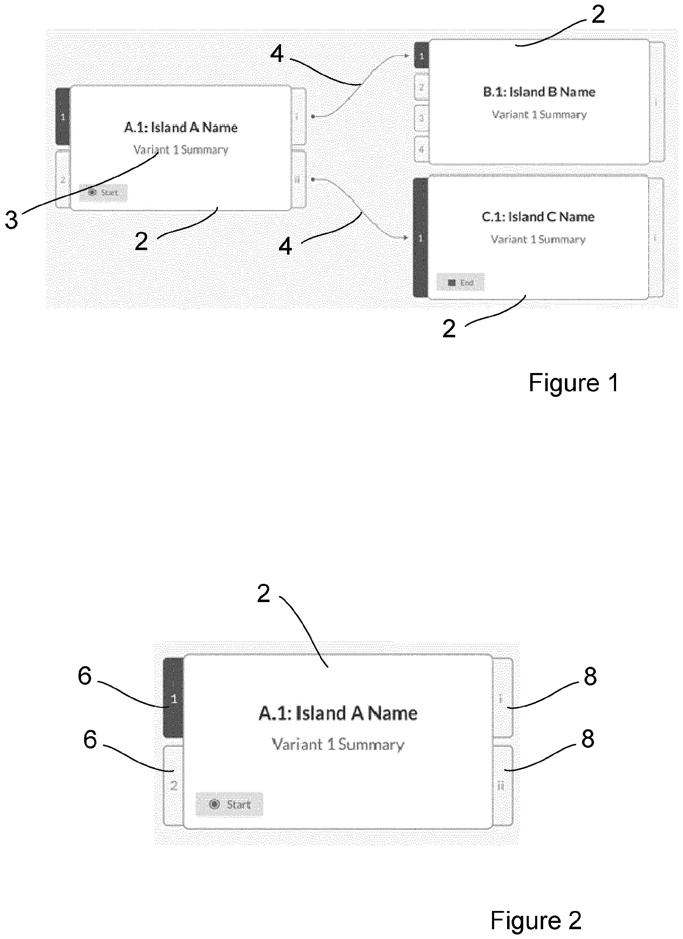

With reference to Figure 1, the central component of the tool is an island, or element, 2. A completed graph has several of these islands and typically each island relates to a scene that needs to be shot in the video production. Thus in Figure 1, there are several islands 2 interconnected by links 4.

Because the final production is intended to be an interactive video, many of the islands 2 will have different variants depending on the path into that particular island as denoted by a particular link 4 from another island. Thus each of the islands 2, may have several variants stored within it, which relate to differences in the scenes for example relating to the detailed script for that scene such as the dialogue, location or sequence. Such variants may also have different exit paths which are represented by different links to other islands being available in the user interface.

However, the JointJS library has no facility for displaying or storing multiple variants of such an element and thus this functionality has been added to the standard library, as described in detail below.

With reference also to Figure 2, an island 2 has at least one input port 6. It also has at least one output port 8. In this example, the ports are represented as rectangular elements on the sides of an island 2. With particular reference to Figure 2, the upper input port 6 is highlighted using in this example, colour, and choosing this particular input port then determines which variant of the island 2 is displayed. The choice of variant then determines what text is shown in the island and also which output port eight are available.

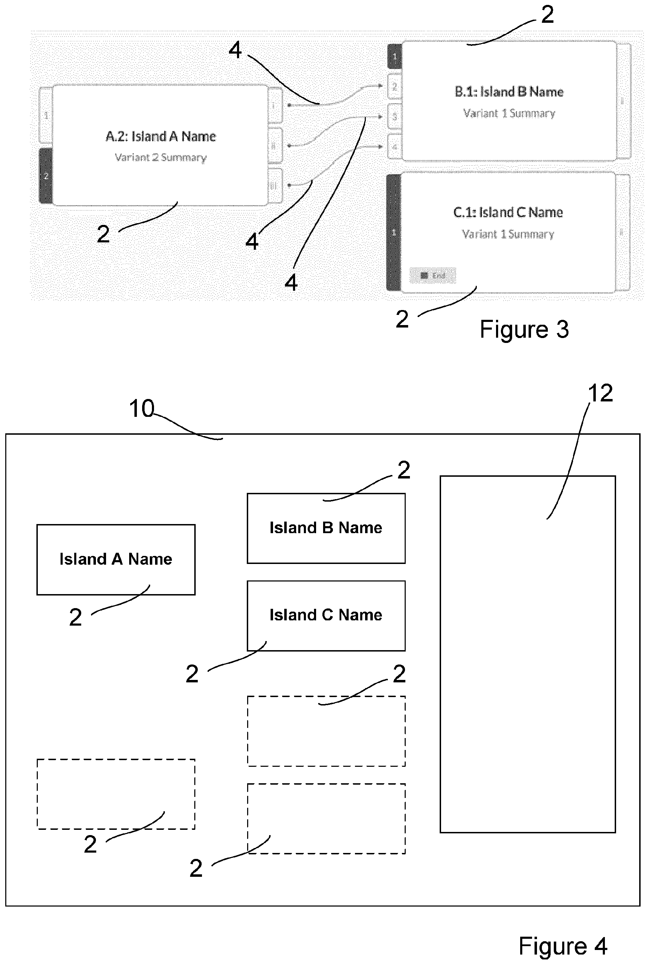

With reference also to Figure 3, it will be seen that by choosing the lower port 6 of the island 2, a second variant (A2) is automatically shown for the island 2. This variant unlike the one shown in Figures 1 and 2, has three output ports 8 which go to different variants (denoted by the selected input ports) of the B1 variant island 2. These output ports denote choices that a viewer may make during viewing, and the different output ports are the different options the viewer may choose when the scene in the particular island is being displayed during viewing.

With reference to Figure 4, a display 10 is shown and a sidebar form for entry of text 12 is also shown. The sidebar form allows details of a selected island 2 to be completed. Alternatively these details may be completed by typing directly into the island on the user interface. These details may include the video content and/or a script for that content, which is shown at that point in the storyline and also text and other identifiers to be shown on the user interface. The form 12 may also be used to choose which other islands are connected with links for or alternatively, the links may be created by clicking a port and then dragging a link 4 to another port.

A variant may be made active in other ways. For example, a clickable "Follow Script Link" hyperlink may be provided next to each Choice (each choice being associated with an output port in the island representation) in the settings sidebar and the script page. When a user clicks this link, the application makes the relevant variant active and renders the relevant data for it on the story map graph, and loads the relevant variant's data into the sidebar. So, for example, if a user has selected variant A1, which has a choice which links to B2, a user can click the "Follow Script Link" link next to that choice, which will make variant B2 active on the story map graph and load its specific data into the sidebar.

Other alternatives include other interface commands such as keyboard shortcuts which switch the active variant without activity at an input port, or other internal or external automations which cause the active variant to be switched if integrated with a third party application or data source.

An example implementation using JointJS, will now be described in detail.

### Story Islands

The data scheme contains high level hierarchical objects known as Story Islands (hereafter "Islands").

In the graph, Islands 2 appear as box 'elements' containing descriptive text. These Island box elements are linked to other Island elements by arrowed lines, or 'links' 4. These links connect to specific 'ports' on the edges of each Island box. (See Figure 1)

The text, ports and links displayed in the Island elements 2 are actually the properties of active Variants, as described in detail below.

As noted above, Figure 1 shows detail from a Story Map showing three Island elements, containing descriptive text, links and ports which are all properties of the active Variant.

In terms of creative functionality, Islands are data storage elements which are broadly and flexibly used to store data about locations, scenes or sequences within a story, depending on the intention of the author.

As metadata objects, Islands contain:
1. descriptive metadata for identification, including Island Name and ID
2. structural metadata about the relationships, types, versions and characteristics of child objects
3. administrative metadata to control access to and change of information by users and the system

### Variants

The parent Island object contains one or more child Variant objects.

In the graph, Variants are displayed as nested "tabs" within the Island box elements. The text and visual elements displayed within the Island box are properties of the actively selected Variant: its selected input port, text fields, its output ports, its links and its Variant Type. (See Figure 2) This may also include other variant-specific data such as status notifications and error messages.

Each port shown at the left of the Island box is associated with a specific Variant. Clicking a port in the UI (or selecting it via another means such as keyboard shortcut, or other internal or external automations) activates the associated variant, which then displays (renders) data from that Variant in the Island element.

Each variant has multiple custom 'choice' fields which hold data about which other Variants this Variant links to. These are rendered as corresponding output ports when this Variant is active, from which links can be made and rendered to other Variants, displays on the graph as link lines connecting to each Variant's input port. (See Figures 1 and 3)

Only one active Variant and its associated data is shown at a time in each Island box element. All properties of inactive Variants are not displayed.

Figure 2 shows a simple Island element for Island A displayed with Variant #1 active, as indicated by the dark highlighted "tab" input port at the left of the Island element. Corresponding data properties of this Variant are rendered in the Island element (Island and Variant IDs, Island name, Variant Summary, Variant type). This Variant has two custom 'choice' properties which hold data about which other Variants this Variant links to. These are rendered on the Island element 2 as two corresponding output ports 8 when this Variant is active, from which links can be made and rendered to other Variants.

In terms of creative functionality, Variants allow an interactive story to contain multiple variations of events that happen within the context of the same Island. For example, this might be a single location, scene or sequence in the story, but with slightly different events or dialogue occurring in each of the Island's different Variants. The contents of the Variant depend on which path has been followed up to this point by a viewer/user interacting with the story.

As metadata objects, Variants contain:
1. descriptive metadata for identification, including the Variant ID
2. content metadata, which reference creative script text and rich media files which together make up the creative content being authored in , including the Variant summary
3. interactive metadata which allows users to define the ways in which data will be presented in interactive interfaces, including Variant type

### JointJS diagramming concepts

In the preferred embodiment, the graph, or story map, was built using the open source JointJS library. JointJS is an open source framework targeted at creating complex and interactive graphs. It is based on Backbone.js and uses the JQuery and Lodash libraries.

### Graph and Paper

JointJS applications have a *graph* and a *paper.*

The **graph** is a data model behind all JointJS diagrams.

The graph is a model containing a reference to all components of a diagram - i.e. all the "cells" (elements and links) of the diagram.

The **paper** is a view responsible for rendering the graph for a user to see in web browser. When a paper is associated with a graph, the paper makes sure that all the cells added to the graph are automatically rendered in the way they should, based on the data held in the graph.

### Cells: Elements and Links

Cells are either Elements or Links.

### Elements

Elements are components of a diagram which are typically displayed as shapes (e.g. a square box in a flowchart). Each such shape is defined by an element model, which is referenced in the graph model, which is then rendered on screen by the paper view.

### Links

Links are components of a diagram which connect one element to another. They are typically displayed as lines connecting one shape to another (e.g. the classic arrowed line between boxes on a flowchart). Each such shape is defined by a link model, which is referenced in the graph model, which is then rendered on screen by the paper view.

### Ports

Ports are a feature of diagramming applications. They are displayed as connection points on diagram elements. They are used as "sticky" points for connections when linking between elements. They also further structure the linking information. It is common that certain elements have lists of input and output ports. A link from another element might then point not to the element as a whole, but to one of its ports instead.

The discussion below also describes scalable vector graphics (SVG) and Backbone.JS

For reference, SVG is an XML-based markup language for describing two-dimensional based vector graphics. As such, it's a text-based, open Web standard for describing images that can be rendered cleanly at any size and is designed specifically to work well with other web standards including CSS, DOM, JavaScript, and SMIL. And Backbone.js is a way of structuring data which allows more flexibility, speed and direct control in the User Interface (UI) for rich client-side applications. When a UI action in a client-side application changes an attribute of a data model on the server (e.g. by dragging a box in a diagram on the screen) - all the client-side views which display (render) that model's state in the web browser are updated automatically without requiring complicated data conversations with other parts of the system like the DOM (Document Object Model)

As noted above, it has been necessary to augment the standard JointJS library to implement this switching and filtering of variant data in the graphing tool, by providing some custom adaptations. In summary, some of these augmentations are listed below:
- In JointJs there is no pre-existing concept of tabs, nesting, variants, filtering and switching for graph elements, links and ports, and these elements have to be added.
- Rendering of active Variant data within the View of its parent Island graph element, including the associated input port, creative metadata, the correct associated output ports and links from them to other Variant input ports. Controlled/switched using events detected on customised input ports for the Variant's parent Island element.
- Association of each specific input port with a specific Variant. When a link is created to a Variant in the data model (by whatever means), the link is rendered on the paper so that it connects to the Variant's specific associated input port on the Variant's parent Island element.
- When a UI event is detected connecting a link to a custom "tabbed" input port, the link is understood to connect specifically to the associated Variant, the data model is updated accordingly and the View is rendered to display and retain the link connected to the same port.
- Selection of active Variant via detection of events on a specific input port associated with a specific Variant, updating models and rendering the corresponding active Variant's data, ports and links in the View of the Island element.
- When a new Variant is added to or removed from an Island, the data is updated and the View of the Island element is rendered to reflect the change. This relies on listening to events for the change of Variants, and in response rendering custom input ports and data, output ports and links, as needed to reflect the changed list of Variants.

These custom adaptations are now described in more detail below:

The necessary functionality required that Island elements should display only active Variant data; rendering (and allowing changes to) appropriate Variant data, ports and links according to selection of an active Variant.

There can be multiple input Variants and associated input ports for each Island element. There can be multiple output ports for each Variant and associated links.

The detailed implementation enhances JointJS's model for diagram elements. It is the library's abstraction for elements that can be linked with each other, with an arbitrary number of input and output ports.

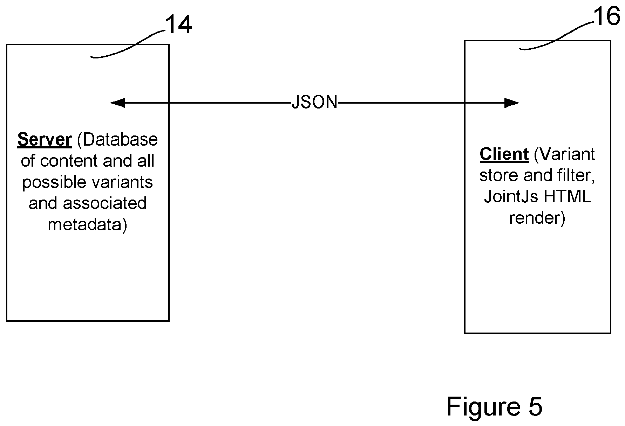

With reference also to Figure 5, the preferred embodiment is implemented as a client server arrangement. A server 14 is typically connected via a network connection (typically an Internet connection) to a client application 16. Alternatively, the client and server may execute on the same hardware. The server holds the complete set of data for the interactive video content. On the other hand, the client 16 must render only the relevant variants which have been selected by the user. The client and server may communicate using the JSON protocol.

### Custom rendering of ports

By default, the library renders ports as a circle with the technical ID of the port next to it. This was undesirable and so the creation of the SVG elements representing the ports had to be overridden to generate custom snippets of SVG that would show:
- The label of the port provided by the data coming from the server
- The custom design code for the port, with the text of the Variant

A visual implementation of this is shown in Figure 2 which shows Island A displayed with port for active Variant #1 at top left, corresponding Variant data rendered in the Island element (Island and Variant IDs, Island name, Variant Summary, Variant type). Also shown are two custom output ports on the right side of the element, which represent two custom 'choice' data properties of this Variant. These hold data about which other Variants this Variant links to and are rendered as output ports and links.

### Choosing an active Variant updates and renders the graph elements, ports and links

The standard library has no pre-existing concept of tabs, nesting and switching for graph elements, links and ports. Therefore this was added by providing a store and filtering function, preferably, at the client side. This function carries out following :
- Storing which Variant is active and therefore which data to render in the element.
- This 'activeVariant' variable is then used to decide:
   ∘ which data to render in the Island element body
   ∘ which input port is rendered as active to indicate the current active Variant, with associated custom Variant ID numbers
   ∘ which output ports and links to render as the active Variant's interactive outbound links, with associated custom link ID numbers
- Detecting clicks on the input ports to update 'activeVariant'. This detection builds on JointJS's provided events
- Rendering the active Variant's element, ports and links accordingly.
- Detecting the change of 'activeVariant' relies on BackboneJS events (one of the libraries JointJS is built on) and changes CSS to update which Variant port displays with active styling
- Updating and rendering the data in the element (specifically to begin with, Island name data, ID number data, Variant summary data and Variant type data). A View component was created to render the Island's body, which updates when 'change' events from the element are fired.
- Updating the rendering of output ports relies on detection of UI events on the input port. When change events are fired upon selection of a new Variant port, to change 'activeVariant', the updates draw from the Variant data to update the rendering of the correct output ports and links, from those of the previous activeVariant to those of the new activeVariant.

### Update of links when changing active Variant tabs

Because of the 'tabbed' alternate rendering system, not all links should be shown on the graph at a given time. In the standard library, without some form of translation or preprocessing, the links would all be displayed and they would be rendered from the centre of one Island element to another.

Therefore, it was necessary to implement a store and filter to keep track of all links, ports and all Island and Variant elements and filter them for display, to only allow the adding to the graph of the links corresponding to the active Variants. The store and filter is responsible for:
- When the page loads at the client, transforming the JSON structure provided by the server into elements that should be added to the graph and rendered on the page.
- Updating and rendering the ports and links displayed on the graph when the active Variant of an Island changes
- Detecting new link drawing events added to the map, as well as links being deleted from the map and synchronizing changes to the server
- Merging data from the sidebar text entry form 10 after it has been sent to the server, updating and rendering the Island and Variant elements with the new data (including potential updates to their outbound ports and links, updating where they point and connect to, creating new ones or deleting those that have been removed).

### Client side updates to the story map graph in order to display different active variant:

When the user makes a variant active by clicking the variant input port 6 or makes a variant active by other means, Javascript is used to change the display/rendering on all the relevant parts of the story map graph, drawing from a database stored on the local client machine.

The Javascript does not access the server 14 at this point because all the relevant data has already been loaded from the server into a local client-side front end database store 16. JointJS is built on Backbone.js and so uses a Backbone store as this local database.

Javascript pulls the data from the Backbone store and changes the display/render the new active Variant data in all the relevant parts of the story map graph.

### Communication between client and server happens in the following instances:

When the user makes a variant-specific text field within an Island 2 editable, for example, by double clicking into a text field 3 in an island 2, and then changes the text and submits it (by pressing Return or clicking outside the text field area), Javascript and the client-server API are used to submit the new variant data back to the server 14, synchronised with the display/render of this data in the Island 2 on the story map graph.

When the user changes a variant-specific link 4 between a variant-specific output port 8 and another variant's input port 6 by user interface activity on the story map graph - e.g.by dragging or clicking the arrowed link lines 6, Javascript and the client-server API are used to submit this new variant-specific data back to the server 14, synchronised with the display/render of these variant-specific links 4 on the story map graph.

When the sidebar 12 is opened/activated by clicking its Open/Close icon in the UI, or by other means (e.g. eyboard shortcut or other command) and an Island 2 is selected in the story map graph, Javascript and the client-server API are used to load the Island's active variant settings and script data from the server into the sidebar 12 text form fields.

When the user selects an Island Variant for display in the sidebar 12 (as above) and then makes another of this Island's variants active on the story map, Javascript and the client-server API are used to load the new active variant data into the sidebar 12 form fields.

When the user makes changes to the Island and variant settings and script data in the sidebar 12, Javascript and the client-server API are used to submit the new variant summary data back to the server and synchronise this with the display/render of this data in the Island on the story map graph. Javascript and the client-server API are then used to update the local data store 16 which in turn is used to update the display/rendering of all the relevant parts of the story map graph for the active variant.

### Update when new Variants and ports are added or removed

Users can create new Variants for a given Island and remove them. When a new Variant is added to or removed from an Island, the Island element on the graph is rendered to reflect the change. This relies on listening to events for the change of Variants for the Islands, and in response rendering custom input ports and data, output ports and links, as needed to reflect the changed list of Variants.

The techniques described above may be implemented, for example, in hardware, software, firmware, or any combination thereof. The techniques described above may be implemented in one or more computer programs executing on a programmable computer including a processor, a storage medium readable by the processor (including, for example, volatile and non-volatile memory and/or storage elements), at least one input device, and at least one output device. Program code may be applied to input entered using the input device to perform the functions described and to generate output. The output may be provided to one or more output devices.

Each computer program within the scope of the claims below may be implemented in any programming language, such as assembly language, machine language, a high-level procedural programming language, or an object-oriented programming language. The programming language may, for example, be a compiled or interpreted programming language.

Each such computer program may be implemented in a computer program product tangibly embodied in a machine-readable storage device for execution by a computer processor. Method steps of the invention may be performed by a computer processor executing a program tangibly embodied on a computer-readable medium to perform functions of the invention by operating on input and generating output. Suitable processors include, by way of example, both general and special purpose microprocessors. Generally, the processor receives instructions and data from a read-only memory and/or a random access memory. Storage devices suitable for tangibly embodying computer program instructions include, for example, all forms of non-volatile memory, such as semiconductor memory devices, including EPROM, EEPROM, and flash memory devices; magnetic disks such as internal hard disks and removable disks; magneto-optical disks; and optical discs such as CD-ROMs, DVDs, Blu-Ray, and DVD-ROMs . Any of the foregoing may be supplemented by, or incorporated in, specially-designed ASICs (application-specific integrated circuits) or FPGAs (Field-Programmable Gate Arrays). A computer can generally also receive programs and data from a storage medium such as an internal disk (not shown) or a removable disk. These elements will also be found in a conventional desktop or workstation computer as well as other computers suitable for executing computer programs implementing the methods described herein, which may be used in conjunction with any digital print engine or marking engine, display monitor, or other raster output device capable of producing colour or grey scale pixels on paper, film, display screen, or other output medium.

References to clients and servers may include devices operating separately and interconnected over a network, or executing on the same hardware.

## Claims

1. A graphing tool comprising:-
a computer system having a processor, a display device and user input means, and further including
a rendering engine for displaying a plurality of graphical elements, ports on the elements and links forming interconnections between the ports, on the display device, and **characterised by**
an element database stored as a data model having an element model for each element and which for each element stores an element object having an element ID, and at least one child variant object having a respective variant ID,
whereby each element model is used by the rendering engine to determine a subset of characteristics of each respective element to render on the display device, based on which variant ID is currently active for the element.

2. A tool as claimed in claim 1, wherein the tool is arranged to detect user interface activity at an input port and to cause a variant ID to be active based on which input port is selected by a user.

3. A tool as claimed in claim 1 or 2, wherein the active variant ID Is used by the rendering engine to determine which data to render in the element body.

4. A tool as claimed in any preceding claim, wherein the active variant ID Is used by the rendering engine to determine which input port is rendered as active to indicate, on the user interface, the current active variant.

5. A tool as claimed in any preceding claim, wherein the active variant ID Is used by the rendering engine to determine which output ports and links to render as the active variant's interactive outbound links.

6. A tool as claimed in claim 5, wherein the tool is arranged to provide a user clickable area for each possible respective variant object for a current element, on the display device such as in a user input form, to detect user interface activity at the user clickable area and to select the relevant active variant ID when the user clickable area is activated.

7. A tool as claimed in claim 5 or claimed 6, arranged to respond to keyboard input to select the active variant ID.

8. A tool as claimed in any of claims 5 to 7, arranged to respond to commands from a third party software application to select the active variant ID.

9. A tool as claimed in any preceding claim, wherein a change of the active variant ID is used by the rendering engine to cause a CSS update which changes which element ports are displayed, using active styling.

10. A tool as claimed in any preceding claim, wherein the rendering engine implements JointJs and the ports are rendered using SVG.

11. A tool as claimed in any preceding claim, including a variant user input interface such as an input form in a sidebar or an input area directly adjacent or inside an element, which is arranged to allow entry and/or editing of the data associated with the active variant.

12. A tool as claimed in any preceding claim, wherein each child variant object holds metadata about the types, versions and/or characteristics of child object variant properties such as body text, input and/or output ports and/or links to other elements.

13. A tool as claimed in any preceding claim, wherein each element object holds descriptive metadata for identification, including element Name and ID,
structural metadata about the relationships, types, versions and/or characteristics of child objects, and/or
administrative metadata to control access to and change of information by users and the system.

14. A computer program product directly loadable into the internal memory of a digital computer,
comprising software code portions for performing the steps of any preceding claim when said product is run on a computer.

## Amended claims

### Amended claims in accordance with Rule 137(2) EPC.

1. A graphing tool to assist with modelling an interactive video or TV story, comprising:
a computer system having a processor, a display device and user input means, and further including
a rendering engine for displaying a graph comprising a plurality of graphical island elements for storing data such as locations, scenes or sequences within the story, each element having an element body, ports on the elements and links forming interconnections between the ports, on the display device, and **characterised by** an element database stored as a data model having an element model for each element and which for each element stores an element object having an element ID, and at least one child variant object having a respective variant ID,
whereby each element model is used by the rendering engine to determine a subset of characteristics of each respective element to render on the display device, based on which variant ID is currently made active by a user, for the element, whereby a single variant is displayed in the island element to the exclusion of any other variants of that island element, dependent on the active variant ID for that island element.

2. A tool as claimed in claim 1, wherein one of the elements has a port which is an input port, and wherein the tool is arranged to detect user interface activity at the input port and to cause a variant ID associated in the element database with that input port to be active based on which input port is selected by a user.

3. A tool as claimed in claim 1 or 2, wherein the active variant ID is used by the rendering engine to determine which data to render in the element body.

4. A tool as claimed in any preceding claim, wherein one of the elements has a port which is an input port, and wherein the active variant ID is used by the rendering engine to determine which input port is rendered as active to indicate, on the user interface, the current active variant.

5. A tool as claimed in any preceding claim, wherein one of the elements has a port which is an output port, and wherein the active variant ID is used by the rendering engine to determine which output ports and links to render as the active variant's interactive outbound links.

6. A tool as claimed in claim 5, wherein the tool is arranged to provide a user clickable area for each possible respective variant object for a current element, on the display device such as in a user input form, to detect user interface activity at the user clickable area and to select the relevant active variant ID when the user clickable area is activated.

7. A tool as claimed in claim 5 or claimed 6, arranged to respond to keyboard input to select the active variant ID.

8. A tool as claimed in any of claims 5 to 7, arranged to respond to commands from a third party software application to select the active variant ID.

9. A tool as claimed in any preceding claim, wherein a change of the active variant ID is used by the rendering engine to cause a CSS update which changes which element ports are displayed, using active styling.

10. A tool as claimed in any preceding claim, wherein the rendering engine implements JointJs and the ports are rendered using SVG.

11. A tool as claimed in any preceding claim, including a variant user input interface such as an input form in a sidebar or an input area directly adjacent or inside an element, which is arranged to allow entry and/or editing of the data associated with the active variant.

12. A tool as claimed in any preceding claim, wherein each child variant object holds metadata about the types, versions and/or characteristics of child object variant properties such as body text, input and/or output ports and/or links to other elements.

13. A tool as claimed in any preceding claim, wherein each element object holds descriptive metadata for identification, including element Name and ID,
structural metadata about the relationships, types, versions and/or characteristics of child objects, and/or
administrative metadata to control access to and change of information by users and the system.

14. A computer program product directly loadable into the internal memory of a digital computer,
comprising software code portions for performing the steps of any preceding claim when said product is run on a computer.
